# EUROPEAN PATENT APPLICATION

(11) **EP 3 906 785 A1**
(43) Date of publication of application: **10.11.2021**
(21) Application number: 21171263.3
(22) Date of filing: 29.04.2021
(51) Int. Cl.: A23C 9/154, A23C 9/156, A23C 3/02

(54) **A METHOD OF PRODUCING AN ACIDIFIED DAIRY PRODUCT**

(30) Priority: 06.05.2020 EP 20173108
(71) Applicant: Tetra Laval Holdings & Finance S.A., 1009 Pully (CH)
(72) Inventor: Loserius, Anna, 23731 Bjärred (SE); MALMGREN, Bozena, SE-226 53 Lund (SE)
(74) Representative: Tetra Pak - Patent Attorneys SE

(57) **Abstract**

The present invention relates to a method a method (200) of producing an acidified dairy product (ADP) with at least 2% mass protein content, the method (200) comprising the steps of mixing (215) a milk-based source (MS) with a stabilizer (ST), by means of a mixer (110), at a first temperature in the range of 50 to 80ºC to obtain a first mixture (FM) to stabilize proteins in the milk-based source (MS), cooling the first mixture (FM) from the first temperature to the second temperature in the range of 5 to 30ºC, adding (230) a first additive (FA) that comprises any of or any combination of natural and synthetic taste of at least one dairy fermented product to the first mixture (FM) at the second temperature, to obtain a second mixture (SM), adding (240) an acidic solution (AS) of any of or any combination of lactic acid, citric acid, ascorbic acid and phosphoric acid to the second mixture (SM) at the second temperature to obtain an acidic second mixture (ASM) with a pH value in the range of 3.8 to 4.5, homogenizing (250) the acidic second mixture (ASM) to obtain a homogenized acidic second mixture (HASM), heating (255) the homogenized acidic second mixture (HASM), by means of a heater (130), to a third temperature to obtain a heated homogenized acidic second mixture (HHASM), and cooling (260) the heated sterilized homogenized acidic second mixture (HHASM), by means of a cooler (140), to a fourth temperature to obtain the acidified dairy product (ADP).

## Description

### Technical Field

The inventive concept relates to a method of producing an acidified dairy product, particularly acidified dairy products tasted like at least one dairy fermented product.

### Background Art

Traditional dairy products such as yogurt have been produced into a variety of new formats such as flavored yogurt and nutrition-packed yogurt. Conventionally, yogurt has been produced by bacterial fermentation of milk. The bacterial fermentation of milk produces lactic acid, which acts on milk protein and produces yogurt with its texture and mouthfeel. A fermentation process is rather time consuming and costly, as it requires fermentation equipment. Therefore, there is a need to provide a method, to at least partly, address the abovementioned limitations.

### Summary

It is an object of the present inventive concept to at least partly overcome one or more of the above-identified limitations of the prior art. In particular, it is an object of the present inventive concept to provide a method of producing an acidified dairy product, particularly acidified dairy products tasted like at least one dairy fermented product, in a simpler and faster manner with a lower cost, compared to conventional methods. In addition, it is an object of the present inventive concept to provide a method of producing an acidified dairy product that requires reduced energy consumption and is more compact, compared to conventional methods.

According to an aspect of the present inventive concept there is provided a method of producing an acidified dairy product with at least 2% mass protein content, the method comprising the steps of: mixing a milk-based source with a stabilizer, by means of a mixer, at a first temperature in the range of 50 to 80ºC to obtain a first mixture to stabilize proteins in the milk-based source, cooling the first mixture (FM) from the first temperature to the second temperature in the range of 5 to 30ºC, adding a first additive that comprises any of or any combination of natural and synthetic taste of at least one dairy fermented product to the first mixture at the second temperature, to obtain a second mixture, adding an acidic solution of any of or any combination of lactic acid, citric acid, ascorbic acid and phosphoric acid to the second mixture at the second temperature to obtain an acidic second mixture with a pH value in the range of 3.8 to 4.5, homogenizing the acidic second mixture to obtain a homogenized acidic second mixture, heating the homogenized acidic second mixture, by means of a heater, to a third temperature to obtain a heated sterilized homogenized acidic second mixture, and cooling the heated homogenized acidic second mixture, by means of a cooler, to a fourth temperature to obtain the acidified dairy product.

The step of mixing the milk-based source with the stabilizer at the first temperature allows for protecting proteins of the milk-based source against precipitation and hence sedimentation, particularly whey proteins. This is especially important when a product having at least 2% mass protein content to stabilize. The step of mixing the milk-based source with the stabilizer at the first temperature contributes to formation of the acidified dairy product with a desired viscosity and mouthfeel.

The step of adding the first additive to the first mixture at a second temperature, to obtain the second mixture, allows for producing the acidified dairy product with a desired taste and flavor. In addition, the step of adding the first additive to the first mixture at the second temperature allows for preventing or at least reducing losing the taste and the flavor provided by the first additive. The addition of the first additive before the addition of acidic solution provides better adjustment of pH value of the final product due to avoiding addition of any other ingredient after acidic solution.

The step of adding the acidic solution to the second mixture at the second temperature allows for controlling the pH value of the second mixture and thereby obtaining the desired pH value in the range of 3.8 to 4.5. The acid solution used is preferably not a juice. Thus, a plain taste of a dairy fermented product can be achieved. The step of adding the acidic solution to the second mixture allows the acid, which acts on the milk protein and produces curd with its texture and mouthfeel and thereby renders conventional fermentation processes superfluous. This in turn simplifies production of the acidified dairy products and reduces the cost of producing the acidified dairy products. The addition of the acidic solution may be performed slowly. That helps to avoid protein sedimentation together with using stabilizer.

The step of homogenizing the acidic second mixture allows for improving of heat stability of the acidified product by reaction with the stabilizer and reducing a size of particles in the homogenized acidic second mixture. The step of homogenizing the acidic second mixture also improves sensory properties of the acidified dairy product such as viscosity, taste and texture. The homogenizing may be performed by means of a homogenizer. It may be performed at a predetermined pressure.

The step of heating the homogenized acidic second mixture allows reducing microorganisms in the homogenized acidic second mixture and extending the shelf life. Some examples of the heating are ultra-high temperature (UHT) treatment and pasteurization processes. The step of heating also contributes to stabilization of the acidified dairy product against whey separation (wheying-off) and sedimentation during storage.

The step of cooling the heated homogenized acidic second mixture allows for lowering the temperature of the heated homogenized acidic second mixture to the fourth temperature prior to obtaining the acidified dairy product. The step of cooling further prepares the obtained the acidified dairy product for being filled into packages. The method may further comprise, subsequent to the step of cooling, filling the acidified dairy product into packages.

By "acidified dairy product" is hereby meant non-fermented acidified spoonable product and non-fermented acidified drink having a protein content of more than 1%, preferably at least 2% in mass percent. The acidified dairy products are made from dairy products such as pasteurized milk or milk powders and are acidified by a type of acid such as lactic acid, citric acid, ascorbic acid and/or phosphoric acid resulting in a targeted taste. Examples of the acidified dairy product are yogurt, flavored yogurt and yogurt drink (e.g. Airan or Ayran).

By "milk-based source" is hereby meant a dairy product having a protein content such as any of or any combination of pasteurized milk and recombined milk based on milk powder.

The stabilizer may comprise any of or any combination of pectin, starch, carboxymethyl cellulose, microcrystalline cellulose, and gellan gum. Thereby a variety of stabilizers may be used and selected based on different needs and desires.

The stabilizer may be pectin and the method, as an alternative to direct mixture of pectin to the milk-based source as powder, may further comprise mixing the pectin with water, prior to the step of mixing the milk-based source with the pectin, to obtain a pectin to water ratio in the range of 2% to 4%, such as 3% in mass percent. The pectin may be mixed with water at a temperature in the range of 60 to 80 ºC such as 70 ºC to enhance mixing the pectin with water.

The acidic solution may comprise any of or any combination of lactic acid, citric acid, ascorbic acid and phosphoric acid. Thereby a variety of acidic solutions may be used and selected based on different needs and desires.

The first additive comprises any of or any combination of natural and synthetic taste of at least one dairy fermented product. The first additive may provide a desired taste and flavor to the acidified dairy product. Examples of natural and synthetic taste of at least one dairy fermented product is yogurt, ayran etc. By the help of this, the cost of producing fermented dairy product may be decreased, since there will be no need to any fermentation tank and any cooler needed after the fermentation.

The step of mixing the milk-based source with the stabilizer, may further comprise adding a sweetener to the first mixture to obtain a sweetened first mixture. The step of adding the sweetener may be performed when a sweet acidified dairy product is desired e.g. a sweet yogurt. The sweetener may be any sweetener such as sugar like white sugar or brown sugar and sweeteners commercially known such as stevia, aspartame, sucralose, saccharine. In the case that sugar is used as the sweetener, the sugar to first mixture ratio may be in the range of 6 to 12% in mass percent.

The step of adding the first additive to the first mixture, may further comprise adding a second additive. The second additive may comprise any of or any combination of fruit concentrates, juices, natural and artificial flavors and color(s). In a possible method, the second additive may be added to the sweetened first mixture to obtain a tasted and/or colored sweetened first mixture. Thereby, the tasted and/or colored sweetened first mixture with various tastes such as fruit(s) and/or flavors such as vanilla, chocolate flavor may be obtained.

The method may further comprise, prior to the step of mixing the milk-based source with the stabilizer, adding water to the milk-based source to obtain a diluted milk-based source. The step of adding the water may be performed when an acidified drink e.g. ayran is desired. The water may e.g. be added to pasteurized milk or the water may be added more to milk powder when the milk is recombined to produce diluted recombined milk.

The method may further comprise adding salt to the acidified dairy product, subsequent to the step of cooling the heated homogenized acidic second mixture. The step of adding the salt to the acidified dairy product may provide a desired salty taste to the acidified dairy product. The step of adding the salt, subsequent to the step of cooling the acidified dairy product, may result into a more a stable acidified dairy product than adding the salt in steps prior to the cooling, for example at the mixing step. The salt may e.g. be added to the acidified drink, such as ayran.

The first temperature may be in the range of 5 to 80ºC. The first temperature may be selected based on the stabilizer at hand. When the stabilizer is pectin, the first temperature may be in the range of 50 to 80 ºC, preferably 55 ºC to enhance mixing the milk-based source with the solved pectin or at 5 - 60°C, preferably 55 ºC, in case pectin solution was previously obtained by mixing the pectin with hot water at preferably 70°C. When other stabilizers than pectin are used such as starch, the first temperature may be in the range of 5 to 60 ºC.

The second temperature may be in the range of 5 to 30 ºC, preferably 25 ºC.

The step of adding an acidic solution to the second mixture may further comprise repeatedly measuring the pH value of the second mixture and stopping the step of adding the acidic solution when the pH value in the range of 3.8 to 4.5 is achieved. Thereby the pH value of the second mixture may repeatedly or continuously be controlled. In addition, the second mixture with the pH value of 3.8 to 4.5 may be obtained quicker using less time, as compared to conventional fermentation process. This in turn may result in that the production of the acidified dairy product may be performed quicker and hence using less time, energy and equipment.

The mixer may be a high shear mixer. The use of a high shear mixer may enhance mixing of the milk-based source with the stabilizer i.e. to obtain the first mixture having a continuous liquid phase.

The steps of adding the first additive to the first mixture and the step of adding the acidic solution to the second mixture may be performed in the mixer. Thereby the same mixer as the mixer used in the step of mixing the milk-based source with the stabilizer may be used. Hence, less equipment and less space may be needed to produce the acidified dairy product.

The pH value stated before may be particularly in the range of 3.8 to 4.2. The invention may be not related products having a pH value 4.6 or above.

The present inventive concept may have no sterilization step, such as heat treatment or like, before mixing all ingredients including the acidic solution; so it may have only sterilization step or steps, such as heat treatment or like, after the mixing all ingredients including the acidic solution.

Still other objectives, features, aspects and advantages of the invention will appear from the following detailed description as well as from the drawing.

### Brief Description of the Drawings

Embodiments of the invention will now be described, by way of examples, with reference to the accompanying schematic drawings, in which
Fig. 1 is a schematic illustration of a system 100 for producing an acidified dairy product.
Fig. 2 is a block scheme of a method 200 for producing an acidified dairy product.

### Detailed Description

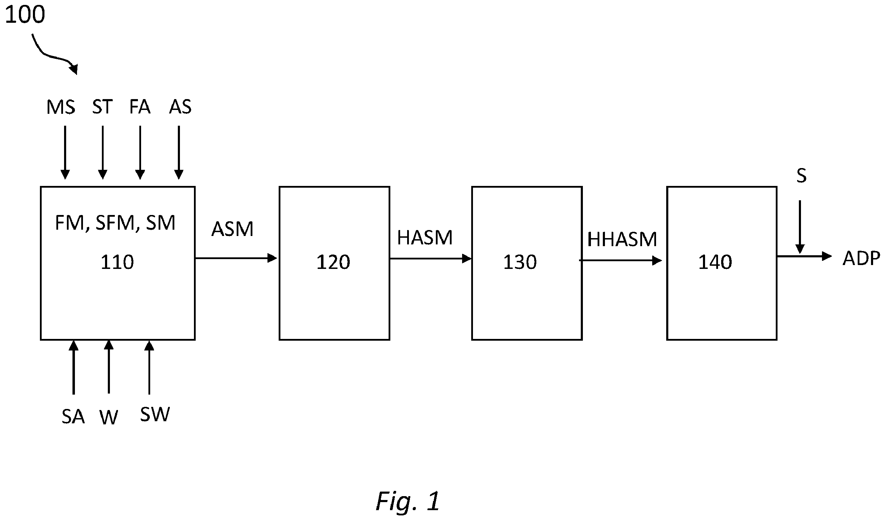

With reference to Fig. 1 a system 100 is illustrated. The system 100 may be used to produce an acidified dairy product ADP. In the following, an acidified dairy product ADP and the system 100 in relation to producing an acidified dairy product ADP will be described. The acidified dairy product ADP is typically a dairy product which is acidified by a type of acid such as lactic acid, citric acid, ascorbic acid and phosphoric acid. Examples of acidified dairy products are yogurt, flavored yogurt and ayran.

Fig. 1 shows that the system 100 comprises a mixer 110. The mixer 110 may be a high shear mixer. The mixer 110 may be any conventional and commercially available mixer. The mixer 110 may comprise one mixer. The mixer 110 may comprise a plurality of mixers arranged in series. Fig. 1 shows that a milk-based source MS and a stabilizer ST are provided to the mixer 110. Examples of milk-based sources MB are pasteurized milk and recombined milk based on milk powder. The milk-based source MB may have a protein content higher than 1% in mass percent. The stabilizer ST may comprise any of or any combination of pectin, starch, carboxymethyl cellulose, microcrystalline cellulose, and gellan gum. The mixer 110 is adapted to mix the milk-base source MS and the stabilizer ST. The mixer 110 mixes the milk-base source MS and the stabilizer ST at a first temperature to obtain a first mixture FM. The first temperature may be in the range of 5 to 80 ºC. The first temperature may be selected based on the stabilizer ST. When the stabilizer is pectin, the first temperature may preferably be in the range of 50 to 80 ºC, preferably 55 ºC. In addition, when the stabilizer ST is pectin, the pectin may be mixed with water W, prior to the mixing 215 the milk-based source MS with the pectin at 50 to 80 ºC, preferably 70 ºC. The pectin may be mixed with water W in the same mixer 110 used for mixing 215 the milk-based source MS with the stabilizer ST. The pectin may be mixed with water W to form a pectin solution in another mixer arranged upstream the mixer 110 used for mixing 215 the milk-based source MS with the stabilizer ST. The step of mixing the pectin and water W arranged upstream the mixer 110 may be performed to obtain a pectin to water W ratio in the range of 2% to 4%, preferably 3% in mass percent. In an alternative, if the pectin solution is used, it may be mixed to the milk-based source at 55 C. It may be also added at below 10 C, if it is added to pasteurized milk. It may be added to the milk powder after being cooled to 55 C to produce recombined milk at the same time. In an alternative, if pectin is used as powder, it may be added to the pasteurized milk or recombined milk at 55 C. When other stabilizers than pectin are used such as starch, the first temperature may be in the range of 5 to 60 ºC. When other stabilizers than pectin are used no mixing with water may be needed.

Fig. 1 further shows that a first additive FA is provided to the mixer 110. The first additive FA may be provided to the mixer 110 by means of a first control valve. The first control valve may be connected to a first tank comprising the first additive FA. The first additive FA may alternatively be provided to the mixer 110 by means of a first dosing arrangement. The step of adding 230 the first additive FA to the first mixture FM is performed to obtain a second mixture SM. The first additive FA may be added to the same mixer 110 used for mixing 215 the milk-based source MS with the stabilizer ST. The first additive FA may be added to another mixer arranged at downstream the mixer 110 used for mixing 215 the milk-based source MS with the stabilizer ST. The first additive FA may comprise any of or any combination of natural and synthetic taste of at least one dairy fermented product, such as yogurt, ayran etc... The step of adding the first additive FA to the first mixture FM is performed at a second temperature. The second temperature may be in the range of 5 to 30 ºC.

Fig. 1 further shows that an acidic solution AS is provided to the mixer 110. The acidic solution AS may be provided to the mixer 110 by means of a second control valve. The second control valve may be connected to a second tank comprising the acidic solution AS. The acidic solution AS may alternatively be provided to the mixer 110 by means of a second dosing arrangement. The step of adding 240 the acidic solution AS to the second mixture SM is performed to obtain an acidic second mixture ASM. The acidic solution AS may be added to the same mixer 110 used for mixing 215 the milk-based source MS with the stabilizer ST and the first additive FA. The acidic solution AS may be added to another mixer arranged downstream the mixer 110 used for mixing 215 the milk-based source MS with the stabilizer ST and the first additive FA. The acidic solution AS may comprise any of or any combination of lactic acid, citric acid, ascorbic acid and phosphoric acid. The step of adding 240 the acidic solution AS to the second mixture SM is performed at the second temperature. The acidic second mixture ASM has a pH value in the range of 3.8 to 4.5. The step of adding the acidic solution AS to the second mixture SM may comprise repeatedly measuring 245 the pH value of the second mixture. The step of adding the acidic solution AS to the second mixture SM may comprise stopping adding the acidic solution AS to the second mixture SM when the pH value in the range of 3.8 to 4.5 is achieved. The step of repeatedly measuring 245 the pH value of the second mixture may be performed by means of a pH sensor. The step of repeatedly measuring 245 the pH value of the second mixture may be performed in a manner which per se is known in the art.

Fig. 1 further shows that a sweetener SW is provided to the mixer 110. The sweetener SW may be provided to the mixer 110 by means of a third control valve. The third control valve may be connected to a third tank comprising the sweetener SW. The sweetener SW may alternatively be provided to the mixer 110 by means of a third dosing arrangement. The step of adding 220 the sweetener SW to the first mixture FM may be performed to obtain a sweetened first mixture SFM. The sweetener SW may be added to the same mixer 110 used for mixing 215 the milk-based source MS with the stabilizer ST. The sweetener SW may be added to another mixer arranged downstream the mixer 110 used for mixing 215 the milk-based source MS with the stabilizer ST. The sweetener SW may comprise any of or any combination of white sugar, brown sugar and sweeteners like stevia, aspartame, sucralose, saccharine.

Fig. 1 further shows that a second additive SA is provided to the mixer 110. The second additive SA may be provided to the mixer 110 by means of a fourth control valve. The fourth control valve may be connected to a fourth tank comprising the second additive SA. The second additive SA may alternatively be provided to the mixer 110 by means of a fourth dosing arrangement. The step of adding 235 the second additive SA to the sweetened first mixture SFM may be performed to obtain a tasted and/or colored sweetened first mixture. The second additive SA may be added to the same mixer 110 used for mixing the sweetener SW and the first mixture FM. The second additive SA may be added to another mixer arranged downstream the mixer 110 used for mixing the sweetener SW with the first mixture FM. The second additive SA may comprise any of or any combination of fruit concentrates, juices, natural and artificial flavors and color(s). The step of adding 220 the sweetener SW and the step of adding 235 the second additive SA may be performed when an acidified dairy product is desired as flavored and/or colored alternative.

Fig. 1 further shows that water W is provided to the mixer 110. The water W may be provided to the mixer 110 by means of a fifth control valve. The fifth control valve may be connected to a fifth tank comprising the water W. The water W may alternatively be provided to the mixer 110 by means of a fifth dosing arrangement. The water W may be added to the milk-based source MS prior to the step of mixing 215 the milk-base source MS with the stabilizer ST. The step of adding 210 the water W may be performed to obtain a diluted milk-based source. The water W may be added to the same mixer 110 used for mixing 215 the milk-based source MS with the stabilizer ST. The step of adding 210 the water may be performed when an acidified drink is desired such as ayran.

Fig. 1 further shows that the system 100 comprises a homogenizer 120. Fig. 1 shows that the homogenizer 120 is arranged downstream the mixer 110. Fig. 1 shows that an outlet of the mixer 110 is connected to an inlet of the homogenizer 120. The outlet of the mixer 110 may be connected to the inlet of the homogenizer 120 by means of a first pipe. Alternatively, the outlet of the mixer 110 may be connected to an inlet of a storage tank; and the homogenizer 120 may be arranged downstream the storage tank. In another alternative, the homogenizer 120 may be placed inside the heating system explained later. Fig. 1 shows that the acidic second mixture ASM is fed from the mixer 110 into the homogenizer 120. The feeding of the acidic second mixture ASM from the mixer 110 into the homogenizer 120 may be performed by e.g. pumping the acidic second mixture ASM through the first pipe. The homogenizer 120 homogenizes the acidic second mixture ASM to obtain a homogenized acidic second mixture HASM. The homogenizer 120 reduces a size of particles in the acidified second mixture ASM and creates contact between stabilizer and proteins and is such way increase heat stability and storage stability of the acidified dairy product. The homogenizer 120 may improve a homogeneity, stability and mouthfeel of the acidified dairy product ADP. The homogenizer 120 may be any conventional suitable homogenizer which per se is known in the art. The step of homogenizing 250 the acidified second mixture ASM is performed at a predetermined pressure. The predetermined pressure may be in the range of 200 to 250 bar. The step of homogenizing the acidic second mixture ASM may be performed at temperature lower than 60 ºC.

Fig. 1 further shows that the system 100 comprises a heater 130. Fig.1 shows that the heater 130 is arranged downstream the homogenizer 120. In an alternative, when there are more than one heaters, the final heater may be arranged downstream the homogenizer 120. Fig. 1 shows that an outlet of the homogenizer 120 is connected to an inlet of the heater 130. The outlet of the homogenizer 120 may be connected to the inlet of the heater 130 by means of a second pipe. Fig. 1 shows that the homogenized acidic second mixture HASM is fed from the homogenizer 120 into the heater 130. The heater 130 heats the homogenized acidic second mixture HASM to obtain a heated homogenized acidic second mixture HHASM. The step of heating 255 the homogenized acidic second mixture HASM is performed at a third temperature. The third temperature may be in the range of 80 ºC to 140 ºC, preferably 80 ºC to 110 ºC to have at least a sterilization effect. The step of heating 255 the homogenized acidic second mixture HASM may be performed for a time in the range of 4 to 30 sec. The heater 130 may be any conventional heater. The heater 130 may provide UHT treatment or pasteurization. For instance, the heater 130 may perform the UHT treatment using a direct or an indirect heating. In the case of the direct UHT heating, the heater 130 may inject steam into the homogenized acidic second mixture HASM. In the case of the indirect UHT heating, the heater 130 may heat the homogenized acidic second mixture HASM in an indirect manner. In other words, in the case of the indirect UHT heating, the homogenized acidic second mixture HASM may not come into direct contact with the heat source but may instead be heated by a heat exchanger. In this case, the heat exchanger may e.g. be a plate type heat exchanger.

Fig. 1 further shows that the system 100 comprises a cooler 140. Fig. 1 shows that the cooler 140 is arranged downstream the heater 130. Fig. 1 shows that an outlet of the heater 130 is connected to an inlet of the cooler 140. The outlet of the heater 130 may be connected to the inlet of the cooler 140 by means of a third pipe. Fig. 1 shows that the heated homogenized acidic second mixture HHASM is fed from the heater 130 into the cooler 140. The feeding of the heated homogenized acidic second mixture HHASM from the heater 130 into the cooler 140 may be performed by e.g. pumping the heated homogenized acidic second mixture HHASM through the third pipe. The cooler 140 cools the heated homogenized acidic second mixture HHASM to a fourth temperature to obtain the acidified dairy product ADP. The cooler 140 may be any conventional cooler. The step of cooling 260 may be performed in a manner which per se is known in the art. The fourth temperature may be lower than 25 ºC. The fourth temperature may be room temperature.

Fig. 1 further shows that salt S is added to the acidified dairy product ADP, subsequent to the step of cooling 260 the heated homogenized acidic second mixture (HHASM). The adding of the salt S to the acidified dairy product ADP may be performed by means of aseptic dosing arranged downstream the cooler 140. In this case, the acidified dairy product ADP may be fed from the cooler 140 to the aseptic dosing system. The salt S may be guided to the aseptic dosing by means of a sixth control valve connected to the mixer. The sixth control valve may be connected to a sixth tank comprising the salt S. The adding of the salt S to the acidified dairy product ADP may alternatively be performed by adding the salt S at the outlet of the cooler 140. Alternatively, the aseptic dosing may take place inline before an aseptic storage tank or just before filling of the product to a package. The salt S may comprise any of or any combination of commercially known food degree salts. The salt S may be added as solid particles and/or in liquid form as a salt solution. The salt to the acidified dairy product ratio may be in the range of 0.1% to 1% in mass percent.

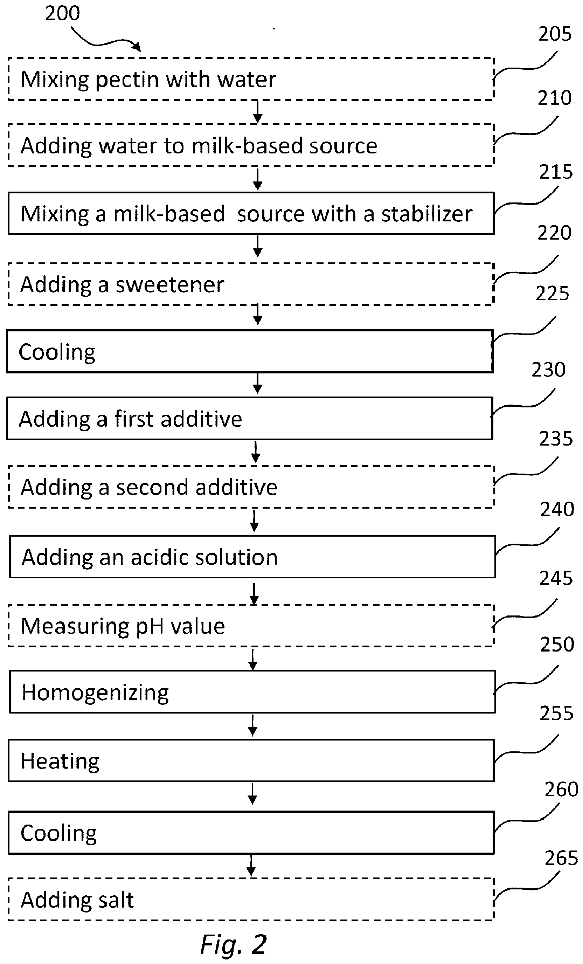

Fig. 2 shows a block scheme of a method 200 for producing an acidified dairy product ADP. The method 200 comprises mixing 215 a milk-based source MS with a stabilizer ST, by means of a high shear mixer, at a first temperature to obtain a first mixture. The step of mixing 215 the milk-based source MS with the stabilizer ST may be performed using the mixer 110, as described above. The step of mixing 215 the milk-based source MS with the stabilizer ST may be performed, as described above.

The method 200 may further comprise, prior to the step of mixing 215 the milk-based source MS with the stabilizer ST, adding 210 water to the milk-based source MS to obtain a diluted milk-based source. The step of adding 210 water to the milk-based source MS may be performed using the mixer 110, as described above. Alternatively, the water W may be added inline to the milk-based source MS or the stabilizer ST. The step of adding 210 water to the milk-based source MS may be performed, as described above.

The method 200 may further comprise, when the stabilizer is pectin, mixing 205 the pectin with water, prior to the step of mixing 215 the milk-based source MS with the pectin. The step of mixing 205 the pectin with water may be performed to obtain a pectin to water ratio in the range of 2% to 4%, preferably 3% in mass percent. The step of mixing 205 the pectin with water may be performed using the mixer 110, as described above. The step of mixing 205 the pectin with water may be performed, as described above.

The method 200 may further comprise adding 220 a sweetener SW to the first mixture FM to obtain a sweetened first mixture SFM. The step of adding 220 the sweetener SW to the first mixture FM may be performed using the mixer 110, as described above. The step of adding 220 the sweetener SW to the first mixture FM may be performed, as described above.

The method 200 further comprises adding 230 a first additive FA to the first mixture FM at a second temperature, to obtain a second mixture SM. The step of adding 230 the first additive FA to the first mixture FM may be performed using the mixer 110, as described above. The step of adding 230 the first additive FA to the first mixture FM may be performed, as described above.

The method 200 may further comprise cooling 225 the first mixture FM from the first temperature to the second temperature, prior to the step of adding 230 the first additive FA to the first mixture FM at the second temperature.

The method 200 may further comprise adding 235 a second additive SA to the sweetened first mixture SFM to obtain a tasted and/or colored sweetened first mixture. The step of adding 235 the second additive SA to the sweetened first mixture SFM may be performed using the mixer 110, as described above. The step of adding 230 the second additive SA to the sweetened first mixture SFM may be performed, as described above.

The method 200 further comprises adding 240 an acidic solution AS to the second mixture SM at the second temperature to obtain an acidic second mixture ASM with a pH value in the range of 3.8 to 4.5. The step of adding 240 the acidic solution to the second mixture SM may be performed using the mixer 110, as described above. The step of adding 240 the acidic solution to the second mixture SM may be performed, as described above.

The step of adding 240 the acidic solution AS to the second mixture SM may further comprise repeatedly measuring 245 the pH value of the second mixture SM and stopping the adding 240 of the acidic solution AS when the pH value in the range of 3.8 to 4.5 is achieved. The step of repeatedly measuring 245 the pH value of the second mixture SM may be performed, as described above.

The method 200 further comprises homogenizing 250 the acidic second mixture ASM, by means of a homogenizer 120, at a predetermined pressure to obtain a homogenized acidic second mixture HASM. The step of homogenizing 250 the acidic second mixture ASM may be performed using the homogenizer 120, as described above. The step of homogenizing 250 the acidic second mixture ASM may be performed, as described above.

The method 200 further comprises heating 255 the homogenized acidic second mixture HASM, by means of a heater 130, to a third temperature to obtain a heated homogenized acidic second mixture HHASM. The step of heating 255 the homogenized acidic second mixture HASM may be performed using the heater 130, as described above. The step of heating 255 the homogenized acidic second mixture HASM may be performed, as described above.

The method 200 further comprises cooling 260 the heated homogenized acidic second mixture HHASM, by means of a cooler 140, to a fourth temperature to obtain the acidified dairy product ADP. The step of cooling 260 the heated homogenized acidic second mixture HHASM may be performed using the cooler 140, as described above. The step of cooling 260 the heated homogenized acidic second mixture HHASM may be performed, as described above.

The method 200 may further comprise adding 265 salt S to the acidified dairy product ADP, subsequent to the step of cooling 260 the acidified dairy product ADP. The step of adding 265 the salt S to the acidified dairy product ADP may be performed, as described above.

From the description above follows that, although various embodiments of the invention have been described and shown, the invention is not restricted thereto, but may also be embodied in other ways within the scope of the subject-matter defined in the following claims.

### EXAMPLE 1:

### Yogurt tasted product:

The method (200) of producing a yogurt tasted product - with at least 2% mass protein content - comprises the steps of:
mixing (215) a milk-based source (MS) with pectin and/or carboxymethyl cellulose as the stabilizer, by means of a mixer (110), at 50-55 ºC to obtain a first mixture (FM) to stabilize proteins in the milk-based source (MS),
adding (230) a natural and/or synthetic taste of yogurt to the first mixture (FM) at a second temperature of 25 ºC, to obtain a second mixture (SM),
adding (240) a lactic acid solution (AS) to the second mixture (SM) at 25 ºC to obtain an acidic second mixture (ASM) with a pH value in the range of 3.9 to 4.2, wherein the lactic acid solution may comprise also phosphoric acid,
homogenizing (250) the acidic second mixture (ASM) to obtain a homogenized acidic second mixture (HASM),
heating (255) the homogenized acidic second mixture (HASM), by means of a heater (130), to a third temperature of 85-95 ºC to obtain a heated sterilized homogenized acidic second mixture (HHASM), and
cooling (260) the heated homogenized acidic second mixture (HHASM), by means of a cooler (140), to a fourth temperature of 20-25 ºC to obtain the yogurt tasted acidified dairy product (ADP).

### EXAMPLE 2:

### Flavored yogurt tasted product:

In addition to example 1, together with yogurt taste additive, also the second additive (SA) comprising any of or any combination of fruit concentrates, juices, natural and artificial food flavors and/or colors is added at 25 ºC to obtain a flavored yogurt tasted product with at least 2% mass protein content.

### EXAMPLE 3:

### Yogurt-tasted drink (Airan or Ayran) product:

In addition to example 1, prior to the step of mixing (215) the milk-based source (MS) with the stabilizer, the method (200) further comprising adding (210) water (W) to the milk-based source (MS) to obtain a diluted milk-based source; and
after cooling (260) to 20-25 ºC, the step of adding (265) salt (S) to the yoghurt taste product is performed aseptically to obtain a yogurt-tasted drink product with at least 2% mass protein content.

## Claims

1. A method (200) of producing an acidified dairy product (ADP) with at least 2% mass protein content, the method (200) comprising the steps of:
mixing (215) a milk-based source (MS) with a stabilizer (ST), by means of a mixer (110), at a first temperature in the range of 50 to 80 ºC to obtain a first mixture (FM) to stabilize proteins in the milk-based source (MS),
cooling the first mixture (FM) from the first temperature to the second temperature in the range of 5 to 30ºC,
adding (230) a first additive (FA) that comprises any of or any combination of natural and synthetic taste of at least one dairy fermented product to the first mixture (FM) at the second temperature, to obtain a second mixture (SM),
adding (240) an acidic solution (AS) of any of or any combination of lactic acid, citric acid, ascorbic acid and phosphoric acid to the second mixture (SM) at the second temperature to obtain an acidic second mixture (ASM) with a pH value in the range of 3.8 to 4.5,
homogenizing (250) the acidic second mixture (ASM) to obtain a homogenized acidic second mixture (HASM),
heating (255) the homogenized acidic second mixture (HASM), by means of a heater (130), to a third temperature to obtain a heated sterilized homogenized acidic second mixture (HHASM), and
cooling (260) the heated homogenized acidic second mixture (HHASM), by means of a cooler (140), to a fourth temperature to obtain the acidified dairy product (ADP).

2. The method (200) according to claim 1, wherein the stabilizer (ST) comprises any of or any combination of pectin, starch, carboxymethyl cellulose, microcrystalline cellulose, and gellan gum.

3. The method (200) according to claim 1, wherein the stabilizer (ST) is pectin and the method (200) further comprising:
Mixing (205) the pectin with water (W), prior to the step of mixing (215) the milk-based source (MS) with the pectin, to obtain a pectin to water (W) ratio in the range of 2% to 4% in mass.

4. The method (200) according to any one of the preceding claims, wherein the step of mixing (215) the milk-based source (MS) with the stabilizer (ST), further comprising:
adding (220) a sweetener (SW) to the first mixture (FM) to obtain a sweetened first mixture (SFM).

5. The method (200) according to claim 3 or 4, wherein the step of adding (230) the first additive (FA) to the first mixture (FM), further comprising:
adding (235) a second additive (SA).

6. The method (200) according to claim 5, wherein the second additive (SA) comprises any of or any combination of fruit concentrates, juices, natural and artificial flavors and/or colors.

7. The method (200) according to any one of the claims 1-3, wherein prior to the step of mixing (215) the milk-based source (MS) with the stabilizer, the method (200) further comprising:
adding (210) water (W) to the milk-based source (MS) to obtain a diluted milk-based source.

8. The method (200) according to claim 7, the method (200) further comprising:
adding (265) salt (S) to the acidified dairy product (ADP), subsequent to the step of cooling (260) the acidified dairy product (ADP).

9. The method (200) according to any of the preceding claims, wherein the step of adding (240) an acidic solution (AS) to the second mixture (SM) further comprising repeatedly measuring (245) the pH value of the second mixture (SM) and stopping the adding (240) of the acidic solution (AS) when the pH value in the range of 3.8 to 4.5 is achieved.

10. The method (200) according to any one of the preceding claims, wherein the mixer (110) is a high shear mixer.

11. The method (200) according to any one of the preceding claims, wherein the steps of adding (230) the first additive (FA) to the first mixture (FM) and the step of adding (240) the acidic solution (AS) to the second mixture (SM) are performed in the mixer (110).
